# EUROPÄISCHE PATENTSCHRIFT

(11) **EP 0 442 253 B1**
(45) Veröffentlichungstag und Bekanntmachung des Hinweises auf die Patenterteilung: **12.04.1995**
(21) Anmeldenummer: 90890329.7
(22) Anmeldetag: 17.12.1990
(51) Int. Cl.: B29C 55/06

(54) **Folienstreckanlage**
Apparatus for stretching of films
Appareil pour l'étirage de films

(30) Priorität: 15.02.1990 AT 347/90
(43) Veröffentlichungstag der Anmeldung: 21.08.1991
(73) Patentinhaber: Lenzing Aktiengesellschaft, A-4860 Lenzing (AT)
(72) Erfinder: Bloo, Johann, A-4863 Seewalchen (AT); Romauer, Ewald, A-4840 Vöcklabruck (AT); Hollerwöger, Alois, A-4860 Lenzing (AT)
(74) Vertreter: Köhler-Pavlik, Johann, Dipl.-Ing.

(56) Entgegenhaltungen:
- DE-A- 1 778 432
- DE-A- 2 725 348
- FR-A- 1 591 484
- FR-A- 2 007 313
- FR-A- 2 088 978
- PLASTVERARBEITER Bd. 40, Nr. 4, April 1989, SPEYER, DE Seiten 202 - 204;'EXTRUDIERTE FOLIEN DURCH MONOAXIALES RECKEN VEREDELN.'

## Beschreibung

Die Erfindung betrifft eine Folienstreckanlage gemäß dem Oberbegriff des Patentanspruches 1.

Eine Folienstreckanlage dieser Art ist durch die FR-A 1 591 484 bekannt geworden, welche einen Kalander zur Herstellung von Folienbahnen aus thermoplastischen Massen mit einer nachgeschaltenen, wahlweise einsetzbaren Reck- und/oder Prägeeinrichtung beschreibt, bei welchem sowohl die Reck- als auch die Prägeeinrichtung als jeweils selbständige Baugruppe in je einem zwischen einer Ruhestellung und einer unmittelbar an den Kalanderständern befindlichen Arbeitsstellung verfahrbaren Wagen untergebracht ist, wobei die beiden Wagen in Parallelaufstellung senkrecht übereinander angeordnet sind. Ziel dieser Kalanderanlage ist eine gute Zugänglichkeit zu den verschiedenen Behandlungseinrichtungen zu schaffen und auch die Umrüstzeiten bei Programmwechsel zu verkürzen.

Die DE-A 1,778.432 hat ein Folienverfahren zum Gegenstand, bei dem als erste Baugruppe eine Kühlstrecke eingesetzt wird um die Folie handhabbar zu machen.

Die DE-A 2,725.348 offenbart eine Einrichtung zum Verstrecken von Kunststoffolienbändchen nach dem Baukastensystem mit aneinandergereihten Abschnitten, welche vollständige und gleiche Bearbeitungsvorrichtungen darstellen. Die Aneinanderreihung erfolgt zur Vergrößerung der Kapazität.

Außerdem war es bisher üblich, das Herstellverfahren und vor allem Verstrecken von Folien auf die Eigenschaften des Endproduktes abzustimmen und danach die Verfahrensparameter zu optimieren.

Die Folienstreckanlage der vorliegenden Erfindung dient zum Verstrecken von Filmen oder Folien aus synthetischen Polymeren verschiedenster chemischer Zusammensetzungen, die zu Endprodukten mit einer breit gefächerten Eigenschaftspalette führen.

Ziel der Erfindung ist durch Neubau der gesamten Anlage, Streckanlagen, die beispielsweise für die Herstellung eines Filmes mit definierten Eigenschaften benutzt wurden, zum Verstrecken von Filmen, die ganz andere Eigenschaften, wie Polymer, Dicke, Drehung, Festigkeit haben, einzusetzen.

Diese Endeigenschaften werden durch Verfahrensparameter während der Verstreckung, wie Verstreckungsgrad, Verstreckungstemperatur, Abzugsgeschwindigkeit etc. bestimmt. Es gibt Folien, die sich besser nach einem Kurzspaltstrecken verarbeiten lassen und solche, die nach dem Langspaltstrecken erhalten werden.

Der heutige Folienmarkt verlangt eine Vielzahl optimierter Produkte. Maschinen, die diese Produkte herstellen, müssen variabel einsetzbar sein.

Die vorliegende Erfindung hat sich zur Aufgabe gemacht, die eingangs beschriebenen Schwierigkeiten zu beheben und eine Anlage herzustellen, die es ermöglicht, auf einfache Weise Folien mit den beschriebenen Endeigenschaften herzustellen.

Diese Aufgabe wird erfindungsgemäß durch die Folienstreckanlage nach Patentanspruch 1 gelöst.

Vorteilhafte Weiterbildungen der Erfindung sind in den Abhängigen Ansprüchen 2 bis 7 beschrieben.

Je nach Art des zu verarbeitenden Materials müssen Temperatur und Rotation dieser Walzen optimal eingestellt werden, was aufwendig ist. Durch die Kombination von angetriebenen und nichtangetriebenen Walzen wird dieses Problem gelöst. Außerdem sind diese Walzen in keiner Weise miteinander verzahnt oder anders verbunden, wie dies bisher üblich war, d.h. dem Stand der Technik entspricht.

Durch die Maßnahmen nach dem Patentanspruch 1 ist die Möglichkeit geboten, eine Folienstreckanlage zu bauen, mit welcher zwei definierte Streckverfahren (Kurzspalt-Langspalt) mit guter Reproduzierbarkeit durchführbar sind. Weiters besteht die Möglichkeit, die Anlage aus Walzen einheitlicher Gestalt und Dimension zu bauen, wobei die Walzen aufgrund des Durchleitens von Wärme- oder Kühlmittel in Gruppen zusammengefaßt werden können, wobei die gleichen Elemente durch Temperaturvariation umfunktioniert werden können.

Ein weiterer Vorteil ergibt sich aus den Merkmalen des Anspruches 2.

Durch die Maßnahmen nach Anspruch 3 wird vor allem erreicht, daß jede Vorheizwalze ein bestimmtes Temperaturprogramm fahren kann.

Nach der Aufheizzone passiert die Folie die Streckzone. Entsprechend der Anordnung der verschiedenen Walzen, kann die Folie nach einem Kurzspalt- oder Langspaltstreckverfahren verarbeitet werden.

Bei der Verstreckung wird Energie frei. Das führt bei manchen Materialien speziell bei hohen Geschwindigkeiten zu einer Überhitzung, Beschädigung oder dem Durchschmelzen in diesem Bereich. Durch die Maßnahme nach Anspruch 4 sind solche Folien problemlos zu verstrecken.

Durch die FR-A 2 007 313 ist eine Folienstreckanlage bekannt geworden, bei welcher die Folie zwischen beheizten und nicht beheizten Walzen geführt wird, wobei die beheizten Walzen aus Metall bestehen und die nicht beheizten Walzen als Andruckwalzen dienen und aus Gummi bestehen oder mit einer elastischen Oberfläche, z. B. aus Kautschuk versehen sind. Keine der bekannten Walzen ist als Stahlwalze mit einer Gummioberfläche ausgebildet.

Durch die erfindungsgemäße Ausbildung der Walzen ist eine Beheizbarkeit derselben möglich, wobei durch den lösbaren Einbau der Walzen ein leichtes Umrüsten von einer Kurz- in eine Langspaltstrecke möglich ist.

Ein weiterer Vorteil der Modulbauweise ermöglicht es, in die Streckanlage den Streckteil mehr als einmal einzubauen. Dabei wird die zweite Streckzone umgekehrt eingebaut, sodaß durch das Merkmal nach Anspruch 5 die Stabilisierungszone entfallen kann. Die zum Streckteil gehörenden Vorheizwalzen, die in der ersten Streckzone den Verstreckwalzen vorgelagert sind und zuerst vom Film durchlaufen werden, werden in der zweiten Streckzone erst nach dem Durchgang des Filmes durch die Streckwalzen vom Film passiert. Die Vorheizwalzen übernehmen hier die Aufgabe der Stabilisierungszone.

In dieser besonderen Ausführungsform können verschiedene Streckverfahren miteinander kombiniert werden, wodurch die verschiedensten Eigenschaften erzielt werden können.

Es ist hier möglich, Lang-Lang-, Kurz-Kurz-, Kurz-Lang- und Lang-Kurzspaltstreckverfahren miteinander zu kombinieren.

Nach dem Verlassen der Stabilisierungszone wird der Film durch eine Abkühlzone geleitet.

Ausführungsbeispiele der Erfindung werden anhand der beiliegenden Zeichnungen erläutert, in welchen
Fig. 1 und 2 je ein Ausführungsbeispiel der erfindungsgemäßen Folienstreckanlage für ein Kurzspaltstrecken in vereinfachter Ausführung in Seitenansicht darstellen,

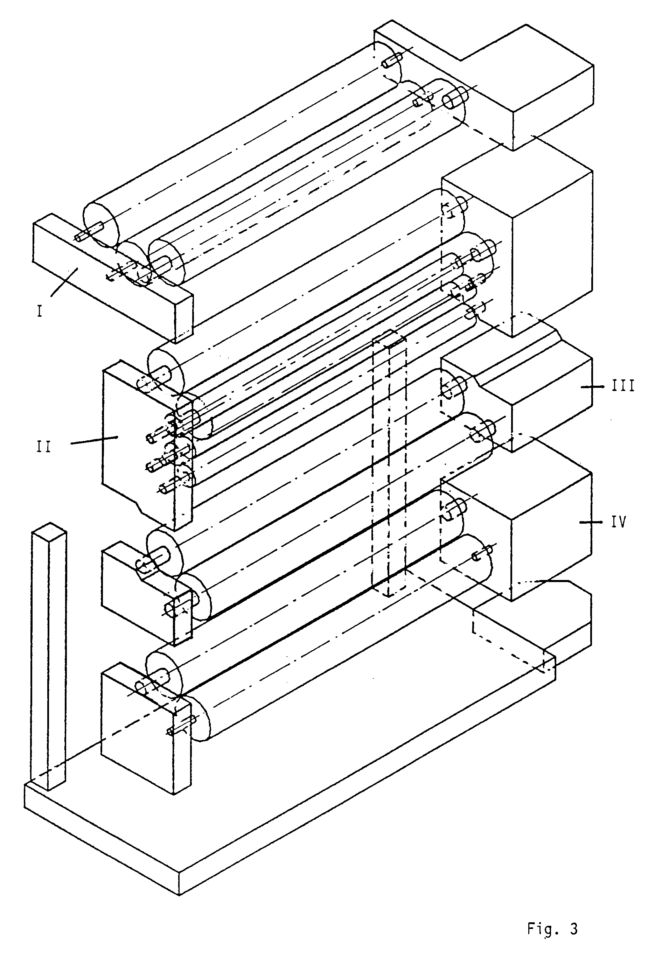

Fig. 3 die Anlage nach Fig. 1, wobei die einzelnen Zonen getrennt voneinander dargestellt sind,
Fig. 4 ein Prinzip der Anordnung der Streckwalzen in der Verstreckzone für ein Kurzspaltstreckverfahren und
Fig. 5 ein Prinzip der Anordnung der Streckwalzen in der Verstreckzone für ein Langspaltstreckverfahren.

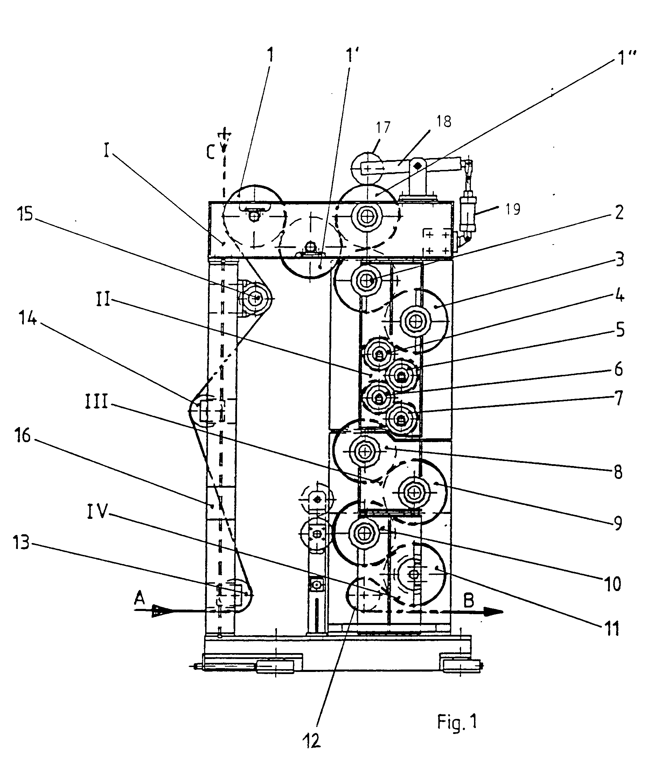

Fig. 1 zeigt eine Folienstreckanlage, bestehend aus vier aufeinanderfolgenden Zonen, u.zw. einer Aufheizzone I, einer Verstreckzone II, einer Stabilisierungszone III und einer Abkühlzone IV, wobei jede der vier Zonen als eigenes Modul ausgebildet ist, und alle Module untereinander lösbar verbunden sind.

Das Modul der Aufheizzone I besitzt drei horizontal und aufeinanderfolgend abwechselnd nach oben und unten höhenversetzt angeordnete Vorheizwalzen 1, 1' und 1'', von welchen die Walze 1'' angetrieben ist. Auf die Walze 1'' wirkt eine Anpreßwalze 17, welche am Ende eines doppelarmigen Hebels 18 gelagert ist und als Haltepunkt dient. Sie bewirkt durch bestimmte Spiralnutformen auch einen Putz und Breithalteeffekt. Der Hebel 18 ist an seinem der Anpreßwalze 17 abgekehrten Arm an einen hydraulischen oder pneumatischen Zylinder 19 angeschlossen.

Das darunter liegende Modul der Verstreckzone II besitzt eingangsseitig untereinander und seitlich versetzt angeordnete Vorheizwalzen 2 und 3, von welchen die Vorheizwalze 3 angetrieben ist. Durch diese Kombination von angetriebenen und nichtangetriebenen Walzen, die außerdem nicht miteinander verbunden sind, ist es möglich, verschiedene Filme, wie PE, PET, PP etc. auf ein und derselben Anlage problemlos zu verarbeiten. Welche Walzen angetrieben und nichtangetrieben werden, hängt vom Temperaturprogramm (= verschiedene Längenausdehnung der Folie) und vom Material der Folie ab.

Jede Vorheizwalze hat einen eigenen Heizkreislauf, um ein bestimmtes Temperaturprogramm zu fahren.

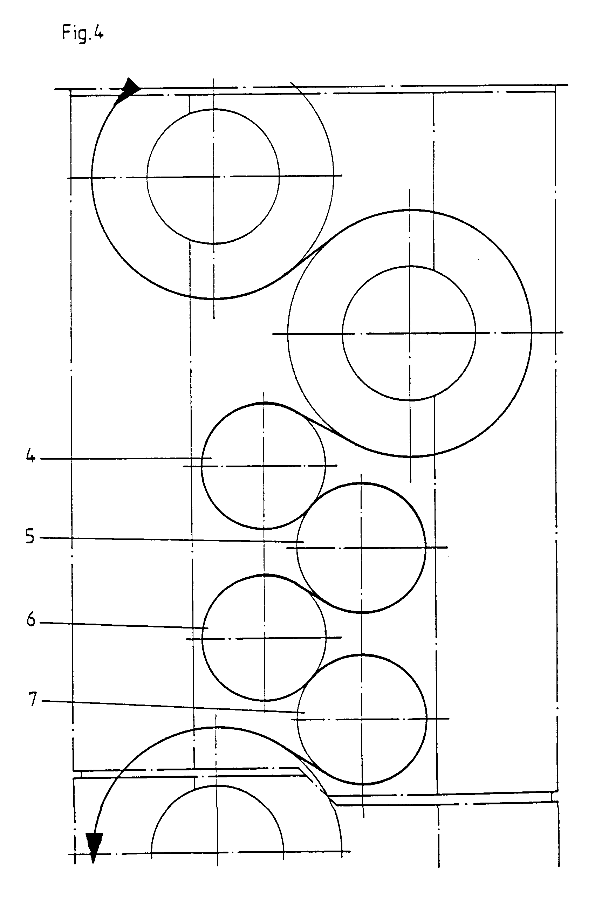

In dem die Verstreckzone II beinhaltenden Modul sind im Anschluß an die Vorheizwalzen 2,3 vier untereinander angeordnete Streckwalzen 4 bis 7 vorgesehen, die abwechselnd seitlich versetzt sind. Die Walzen 5 und 6 sind Stahlwalzen, die beheizt werden. Die Walzen 4 und 7 sind beheizt, haben eine Gummioberfläche und dienen zur Erhöhung des Reibmoments. Diese vier Walzen können gemeinsam mit der Walzenlagerung auf einfache Weise gegeneinander ausgetauscht werden. In den Fig. 1 und 4 ist eine Kurzspaltstrecke dargestellt.

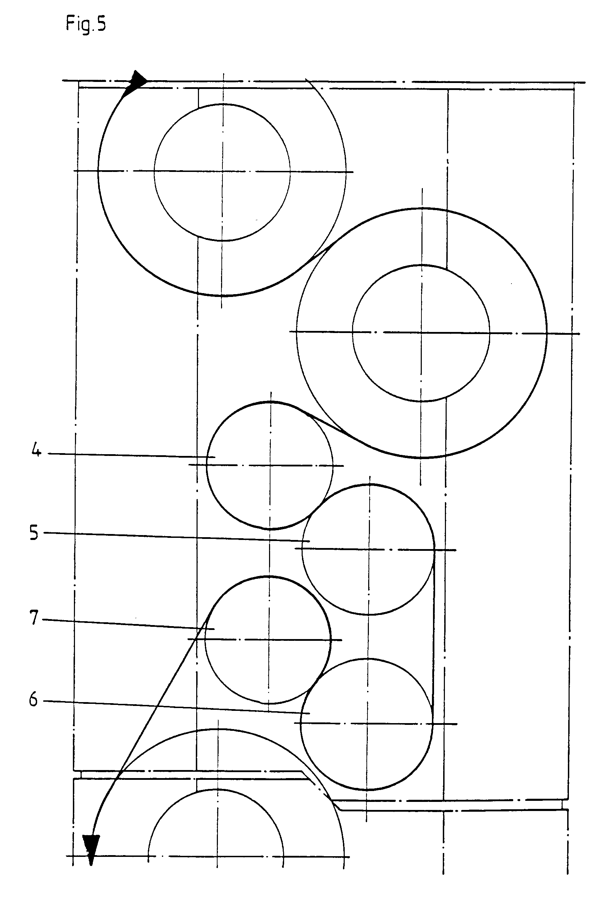

Zum Umrüsten der Anlage vom Kurzspaltstrecken auf Langspaltstrecken nach Fig. 5 wird die Stahlwalze 6 durch die gummierte bzw. gummiüberzogene Walze 7 ausgetauscht.

Derzeit erfolgt dies durch Abziehen der Lagergehäuse an den Walzenstummel.

Eine einfachere Form des Walzenwechselns, wie z.B. Bajonettverschluß, Schnellspanneinrichtung, Schlitzführung etc., ist natürlich auch möglich. Lagergehäuse, Außendurchmesser und Gehäusewandbohrung (Modul) sind gleich.

Die Lagergehäuse der gummierten bzw. gummiüberzogenen Streckwalzen 4 und 7 beinhalten eine Justiereinrichtung zur Spaltdickeneinstellung und ein Federpaket, damit bei Dickstellen in der Folie und bei Abriß der Folie (die Folie wickelt sich in der Praxis um die gummierte Streckwalze) sich die vergrößernde gummierte bzw. gummiüberzogene Walze verschieben kann.

Bei einem Folienabriß wickelt sich die Folie auf der Streckwalze auf. Nach 2 mm Durchmesserzunahme schaltet ein bzw. Endschalter die Anlage ab.

Der die Stabilisierungszone III verkörpernde Modul umfaßt zwei untereinander angeordnete zueinander seitlich versetzte Stabilisierungswalzen 8 und 9.

An diesen Modul schließt ein weiterer als Abkühlzone IV wirkender Modul an, welcher zwei untereinander und seitlich versetzt angeordnete Walzen 10 und 11 aufweist. Außerdem ist eine Umlenkwalze 12 zur Ablenkung der Folie nach außen vorgesehen. Die Austrittsstelle ist mit Pfeil B bezeichnet. Die Kühlwalze ist wassergekühlt.

Der Austrittsstelle B der gestreckten Folie liegt die Eintrittsstelle der noch ungestreckten Folie gegenüber, wo die Folie in Richtung des Pfeiles A eintritt und durch Lenkwalzen 13,14,15, welche von einem Träger 16 gehalten werden, nach oben zum Modul der Aufheizzone I gelenkt wird.

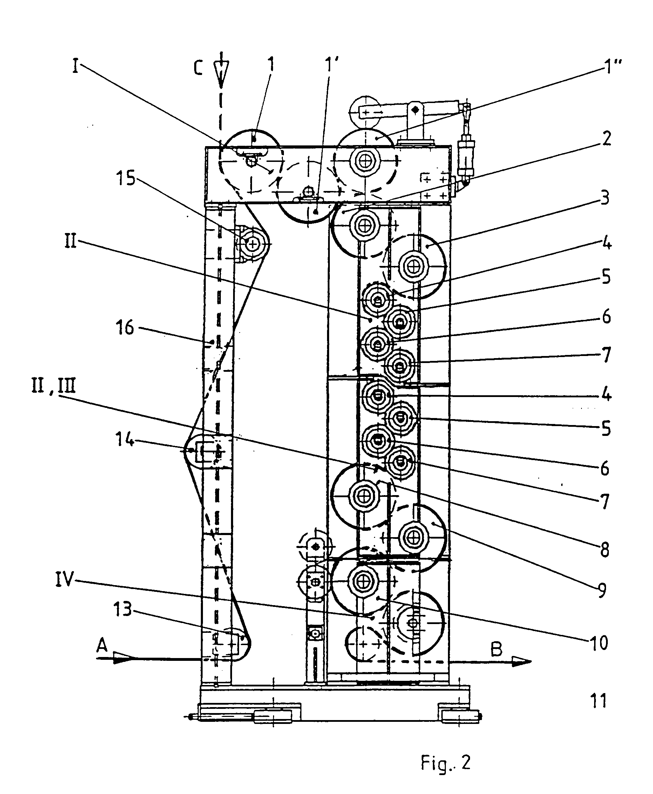

Die Folie kann auch über Pfeil C (Fig. 1 und 2) einlaufen, z.B. bei Blasfolienanlagen.

Beim Ausführungsbeispiel nach Fig. 2 ist anstelle des Moduls der Stabilisierungszone III ein zweites Modul der Verstreckzone II kopfstehend eingebaut, wobei die Vorheizwalzen 2,3 die Rolle der Stabilisierungswalzen 8,9 einnehmen. Die Walzen sind im Anschluß und Aufbau gleich.

Die Vorheizwalze wird an die Heizeinheit angeschlossen, die Stabilisierungswalze an das Temperiergerät (Kombination Heiz-Kühleinheit). Für Vorheizwalze und Stabilisierungswalze ist als Heizbzw. Kühlmedium - Wärmeträgeröl vorgesehen.

### Ausführungsbeispiel:

Material LLDPE
Einlaufgeschwindigkeit 50 m /min
Aufheiztemperatur 20 bis 120°C Kurzspaltverfahren
Verstreckungstemperatur 120°C
Verstreckverhältnis 1:5
Auslaufgeschwindigkeit 250 m/min
Filmeigenschaften:
Dehnung 100 %
Dicke Einlauf 150 »m Auslauf 30 »m
Zugfestigkeit 200 N/mm²
Selbstverständlich können im Rahmen der Erfindung verschiedene konstruktive Änderungen vorgenommen werden. So besteht die Möglichkeit, daß die Vorheizwalzen 1,1' entfallen. Weiters kann die Walze 11 mit einer Anpreßwalze ähnlich der mit 17 bezeichneten, versehen werden. Ebenso können auch mehrere Vorheizwalzen, Stabilisierungswalzen und Kühlwalzen vorgesehen sein.

## Patentansprüche

1. Folienstreckanlage mit mehreren in Fertigungsrichtung nach dem Baukastensystem aneinander gereihten Zonen, wie z.B. einer Aufheizzone, einer Verstreckzone, einer Stabilisierungszone und einer Abkühlzone, wobei zumindest einzelne Zonen (I,II, III, IV) aus lös- und austauschbaren übereinander angeordneten Modulen besteht, dadurch gekennzeichnet, daß die erste Zone als Aufheizzone (I) ausgebildet ist, daß zumindest einzelne Module der Zonen durch Module anderer Walzenausstattungen ersetzbar sind, wobei zumindest eine Verstreckzone (II) aus einer Kombination untereinander angeordneter, zueinander seitlich versetzer Walzen besteht, von welchen einige unabhängig voneinander angetrieben und andere antriebslos sind, und wobei zumindest einige Walzen als Vorheizwalzen (2, 3) dienen oder beheizt sind und einige Walzen (4 bis 7) als Streckwalzen dienen.

2. Anlage nach Anspruch 1, dadurch gekennzeichnet, daß die Aufheizzone (I) aus mindestens drei in horizontaler Richtung aufeinanderfolgender Aufheizwalzen (1) besteht, die abwechselnd nach oben und nach unten höhenversetzt angeordnet sind.

3. Anlage nach Anspruch 1, dadurch gekennzeichnet, daß die Verstreckzone (II) aus zwei aufeinanderfolgenden, zueinander seitlich versetzten Vorheizwalzen (2, 3) und daran anschließenden vier, zueinander abwechselnd links und rechts seitlich versetzten Streckwalzen (4, 5, 6, 7) besteht und daß zumindest einzelne der Vorheizwalzen einen eigenen Heizkreislauf besitzen.

4. Anlage nach Anspruch 3, dadurch gekennzeichnet, daß die Streckwalzen (4, 5, 6, 7) einzeln oder gemeinsam lösbar eingebaut sind und daß zumindest einzelne davon als Stahlwalzen ausgebildet sind, von welchen zumindest einzelne mit einer Gummioberfläche versehen sind, wobei die Folie zwischen Walzen mit Gummioberfläche mindestens zwei Stahlwalzen wahlweise zum Kurzspaltstrecken über mehr als den halben Umfang umschlingt, oder zum Langspaltstrecken in der Streckzone zwischen mindestens zwei Stahlwalzen entlang einer gemeinsamen Tangente gerade verläuft.

5. Anlage nach Anspruch 3, dadurch gekennzeichnet, daß die Verstreckzone (II) kopfstehend einbaufähig ist, sodaß die Streckwalzen (4 bis 7) den Vorheizwalzen (2, 3) vorgestellt sind.

6. Anlage nach Anspruch 3, dadurch gekennzeichnet, daß mindestens eine der Vorheizwalzen (2, 3) der Verstreckzone (II) antriebslos ist, während die anderen Vorheizwalzen (3) selbständig angetrieben sind.

7. Anlage nach Anspruch 4, dadurch gekennzeichnet, daß die Streckwalzen (4 bis 7) beheizbar und gegeneinander austauschbar sind.

## Claims

1. An installation for stretching films, with a plurality of zones arranged in a modular design one after another in the direction of production, such as a heating zone, a stretching zone, a stabilising zone and a cooling zone, wherein at least some zones (I, II, III, IV) comprise detachable and exchangeable modules arranged one above another, **characterised in that** at least some modules in the zones can be replaced by modules from other roller equipment, and at least one stretching zone (II) comprises a combination of rollers arranged one below another and laterally offset in relation to one another, some of the rollers being driven independently of one another and others not being driven, and at least some rollers are pre-heating rollers (2, 3) or are heated, and some rollers (4 to 7) are stretching rollers.

2. An installation in accordance with claim 1, **characterised in that** the heating zone (I) comprises at least three successive heating rollers (1) arranged in the horizontal direction and alternately offset upwardly and downwardly.

3. An installation in accordance with claim 1, **characterised in that** the stretching zone (II) comprises two successive pre-heating rollers (2, 3) offset laterally in relation to one another and followed by four stretching rollers (4, 5, 6, 7) laterally offset in relation to one another alternately to the left and to the right, and at least some of the pre-heating rollers have a separate heating circuit.

4. An installation in accordance with claim 3, **characterised in that** the stretching rollers (4, 5, 6, 7) are installed to be individually or commonly detachable, and at least some thereof are formed as steel rollers, at least some of which are provided with a rubber surface, and for short-gap stretching, the film between rollers with a rubber surface is wrapped round more than half the circumference of at least two steel rollers, or alternatively for long-gap stretching the film extends in a straight line along a common tangent in the stretching zone between at least two steel rollers.

5. An installation in accordance with claim 3, **characterised in that** the stretching zone (II) can be installed in an inverted position, so that the stretching rollers (4 to 7) are positioned in front of the pre-heating rollers (2, 3).

6. An installation in accordance with claim 3, **characterised in that** at least one of the pre-heating rollers (2, 3) in the stretching zone (II) is not driven, whilst the other pre-heating rollers (3) are driven independently.

7. An installation in accordance with claim 4, **characterised in that** the stretching rollers (4 to 7) are heatable and mutually exchangeable.

## Revendications

1. Installation d'étirage de films avec plusieurs zones placées, dans le sens de fabrication, en série selon le système modulaire telles que par exemple une zone de chauffe une zone d'étirage une zone de stabilisation et une zone de refroidissement, chacune des zones (I, II, III, IV) se composant au moins de modules interchangeables disposés les uns au-dessus des autres de manière amovible caractérisée en ce que la première zone fait office de zone de chauffage (I), en ce que les différents modules des zones sont remplaçables par des modules d'autres ensembles de cylindres au moins une zone d'étirage (II) se composant d'une combinaison de cylindres disposés en décalé latéralement entre eux les uns au-dessous des autres, dont certains sont entraînés indépendamment les uns des autres et d'autres ne le sont pas et au moins certains cylindres servent de cylindres de préchauffage (2, 3) ou bien sont chauffés et certains cylindres (4 à 7) font office de cylindres étireurs.

2. Installation selon la revendication 1, caractérisée en ce que la zone de chauffage (I) se compose d'au moins trois cylindres de chauffe (1) successifs dans le sens horizontal qui sont disposés en alternance décalés en hauteur vers le bas et vers le haut.

3. Installation selon la revendication 1, caractérisée en ce que la zone d'étirage (II) se compose de deux cylindres de préchauffage (2, 3) successifs et décalés latéralement l'un par rapport à l'autre, et qui sont suivis de quatre cylindres d'étirage (4, 5, 6, 7) décalés en alternance entre eux latéralement vers la gauche et vers la droite et qu'au moins les différents cylindres de préchauffage disposent de leur propre circuit de chauffage.

4. Installation selon la revendication 3, caractérisée en ce que les cylindres étireurs (4, 5, 6, 7) peuvent être montés de manière amovible séparément ou ensemble et qu'au moins certains d'entre eux sont conçus comme cylindres d'acier dont au moins quelques uns sont dotés d'une surface caoutchoutée la feuille entre des cylindres de surface caoutchoutée entoure au moins deux cylindres d'acier au choix pour l'étirage à intervalle court sur plus de la moitié de la périphérie ou bien pour l'étirage à intervalle long, elle s'achemine en ligne droite dans la zone d'étirage entre au moins deux cylindres d'acier le long d'une tangente commune.

5. Installation selon la revendication 3, caractérisée en ce que la zone d'étirage (II) peut être montée la tête en bas de sorte que les cylindres étireurs (4 à 7) viennent se placer devant les cylindres de préchauffage (2, 3).

6. Installation selon la revendication 3, caractérisée en ce qu'au moins l'un des cylindres de préchauffage (2, 3) de la zone d'étirage (II) est sans entraînement tandis que les autres cylindres de préchauffage (3) sont entraînés de manière autonome.

7. Installation selon la revendication 4, caractérisée en ce que les cylindres étireurs (4 à 7) peuvent être chauffés et sont interchangeables entre eux.
